# EUROPÄISCHE PATENTANMELDUNG

(11) **EP 4 640 358 A1**
(43) Veröffentlichungstag der Anmeldung: **29.10.2025**
(21) Anmeldenummer: 24171824.6
(22) Anmeldetag: 23.04.2024
(51) Int. Cl.: B23K 11/00

(54) **STIFTZIEHEINHEIT EINER WIDERSTANDSBUCKELSCHWEISSVORRICHTUNG**

(71) Anmelder: Prozesspro GmbH, 33647 Bielefeld (DE)
(72) Erfinder: Flemming, Daniel, 33647 Bielefeld (DE)
(74) Vertreter: Konrad, Stephan

(57) **Zusammenfassung**

Es wird Stiftzieheinheit einer Widerstandsbuckelschweißvorrichtung zum zentrischen Verschweißen einer Schweißmutter (1) über einer Durchgangsausnehmung (2) eines Blechs (3), mit einem durch eine Wechselelektrode (4) axial verschiebbaren Zentrierstift (5) für die Schweißmutter (1) mit einer kegelstumpfartigen nach außen gerichteten Schweißmutternaufnahme (6), zur Verfügung gestellt, bei der Schweißfehler und Anlagenstörungen vermieden werden können, was dadurch erzielt wird, dass der Zentrierstift (5) einen 1. Stiftabschnitt (9) aufweist mit einem Zentrierdurchmesser, der geringfügig kleiner ist als das Durchmessermaß der Durchgangsausnehmung (2) einer Bohrung (16) durch die Wechselelektrode (4) und dass die Zentrierstiftspitze (7) unter dem 1. Stiftabschnitt (9) einen 2. Stiftabschnitt (10) mit einem gegen den Zentrierdurchmesser reduzierten Taillendurchmesser aufweist und zwischen dem 1. und dem 2. Stiftabschnitt (9; 10) eine umlaufende Einrückfase (11) erzeugt ist und dass der 1. Stiftabschnitt (9) in einer Ausgangsstellung der Stiftzieheinheit zusammen mit der Einrückfase (11) aus der Wechselelektrode (4) hervorragt.

## Beschreibung

Die Erfindung betrifft eine Stiftzieheinheit einer Widerstandsbuckelschweißvorrichtung gemäß dem Oberbegriff des 1. Patentanspruches. Sie ist vor allem dort relevant, wo die Grundmaterialien der Bauteile sehr steif sind und der Blechwerkstoff somit keine eigene Elastizität mehr hat. Dies ist zum Beispiel im Karosserie-Rohbau bei der Verarbeitung hochfester pressgehärteter Stähle der Fall.

Es ist eine Pressschweißmaschine bekannt, DE 102 09 492 B4, die zum Verschweißen einer Mutter mit einem Blech zwei zueinander bewegliche Elektroden aufweist, eine ortsfeste Wechselelektrode und einen zuführbaren Schweißkopf, wobei die Wechselelektrode eine mittige Bohrung für einen Zentrierstift aufweist, der axial verschieblich darin gelagert ist und welcher nach außen gerichtet mit einer kegelstumpfartigen Schweißmutternaufnahme zum Auffangen und zur Zentrierung einer Schweißmutter versehen ist, wobei der Außendurchmesser des Blechaufnahmebereichs auf dem Zentrierstift einer Durchgangsöffnung in dem Blech in einer solchen Weise angepasst ist, dass das Blech anhand der Durchgangsöffnung hochgenau auf dem Zentrierstift aufnehmbar und ausrichtbar ist, wozu der Zentrierstift schwimmend gegenüber der Wechselelektrode gelagert ist. Diese schwimmende Lagerung des Zentrierstiftes ermöglicht eine Kompensation von Bauteiltoleranzen, da er durch seitliches Ausweichen auch dann in die Durchgangsöffnung des Bleche eindringen kann, wenn die Lage dieser Durchgangsöffnung von der Solllage abweicht.

Nachteilig an diesem vorbekannten Stand der Technik ist, dass der praktikable Bohrungsdurchmesser in der Wechselelektrode die Flexibilität dieser bekannten Pressschweißmaschine sehr stark einschränkt. Um hier größere Toleranzen zuzulassen, könnte zwar die Bohrung in der Wechselelektrode vergrößert werden, was in der Folge aber durch in den vergrößerten Spalt möglicherweise eindringenden Schmutz zu anderen Störungen, wie zum Beispiel zum Verklemmen des Zentrierstiftes beim Ziehen oder beim Zurückdrücken in die Grundstellung führen kann.

Aufgabe der Erfindung ist es deshalb, eine Stiftzieheinheit einer Widerstandsbuckelschweißvorrichtung zur Verfügung zu stellen, bei der Schweißfehler und Anlagenstörungen vermieden werden können, die ihre Ursache in großen Systemtoleranzen haben. Insbesondere soll der Bohrungsdurchmesser der Wechselelektrode der Stiftzieheinheit gleich oder nur sehr geringfügig größer sein als der Durchmesser des Zentrierstiftes und es soll trotzdem ermöglicht werden die Schweißmutter unabhängig von den Toleranzen des Bleches hochgenau gegenüber der Durchgangsöffnung im Blech zu positionieren und in dieser Lage mit dem Blech zu verschweißen.

Die Lösung dieser Aufgabe ergibt sich in Verbindung mit den Merkmalen des Oberbegriffes erfindungsgemäß im Zusammenhang mit den technischen Merkmale des kennzeichnenden Teils des Hauptanspruches.

Die Stiftzieheinheit der Widerstandsbuckelschweißvorrichtung zum zentrischen Verschweißen einer Schweißmutter über einer Durchgangsausnehmung eines Bleches mit einem durch eine Wechselelektrode axial verschiebbaren Zentrierstift für die Schweißmutter mit einer kegelstumpfartig nach außen gerichteten Schweißmutternaufnahme kennzeichnet sich dabei dadurch, dass der Zentrierstift aus mehreren Teilabschnitten mit einer oberen Zentrierstiftspitze und einem ein- oder mehrteiligen Schaft besteht und dass die Zentrierstiftspitze hinter der Schweißmutternaufnahme einen 1. Stiftabschnitt mit einem Zentrierdurchmesser aufweist, der gleich oder nur geringfügig kleiner ist als das Durchmessermaß der Durchgangsausnehmung in einem Blech sowie einer Bohrung in der Wechselelektrode und dass die Zentrierstiftspitze unter dem 1. Stiftabschnitt einen 2. Stiftabschnitt mit einem dagegen reduzierten Taillendurchmesser aufweist und dass zwischen dem 1. und dem 2. Stiftabschnitt eine umlaufende Einrückfase erzeugt ist, wobei der 1. Stiftabschnitt in einer Ausgangsstellung der Stiftzieheinheit zusammen mit der Einrückfase aus der Bohrung der Wechselelektrode hervorragt und der 2. Stiftabschnitt ein Längenmaß aufweist, welches größer ist als die Höhe der von ihm durchgriffenen Wechselelektrode, sodass in der Ausgangsstellung in der Bohrung der Wechselelektrode ein seitliches Radialspiel der Zentrierstiftspitze erzeugt ist. Die Zentrierstiftspitze ist dazu stirnseitig achsparallel und/ oder winkelbeweglich am Schaft des Zentrierstiftes angeordnet.

Die Zentrierstiftspitze erstreckt sich dabei nach dem Auflegen eines Bleches mit ihrer Schweißmutternaufnahme und ihrem 1. Stiftabschnitt durch die Durchgangsausnehmung eines Bleches hindurch, während ein möglicherweise vorliegender geringer Versatz zwischen der Durchgangsausnehmung und dem Zentrierstift durch die Beweglichkeit der Zentrierstiftspitze ausgeglichen wird, wobei die Zentrierstiftspitze zusammen mit dem aufgelegten Blech und der aufgefangenen Schweißmutter anschließend in die Wechselelektrode absenkbar ist und dabei der Zentrierstift von der Einrückfase in der Wechselelektrode und damit die Schweißmutter über der Durchgangsausnehmung des Bleches zentriert wird. Diese erfinderische Bauweise ermöglicht es, dass wenn der 2. Stiftabschnitt beispielsweise etwa 2 mm im Durchmesser geringer ausgebildet ist als der 1. Stiftabschnitt, dass beim Zuführen eines Bleches der Zentrierstift bzw. die Zentrierstiftspitze dem Loch radial bis zu 1 mm in jede Richtung folgen kann. Durch die kegelstumpfartig nach außen gerichtete Schweißmutternaufnahme ist dabei das Auffangen der Schweißmutter auch bei 1 mm Zentrumsversatz unproblematisch.

Beim Schließen des Schweißkopfes rückt der Zentrierstift bzw. die Zentrierstiftspitze dann erfindungsgemäß über die Einführfase mit dem eigentlichen Zentrierdurchmesser des 1. Stiftabschnittes weiter in die Wechselelektrode ein, sodass dort erfindungsgemäß nur ein sehr geringes Spiel vorhanden sein muss, sodass dort das Eindringen von Schmutz und das Entstehen von Störungen grundsätzlich verhindert ist. Die beteiligten Bauteile, Greifer und Roboter sind dabei immer ausreichend flexibel, sodass sie auch eine geringe Querbewegung des Bauteiles zulassen.

Mit der Erfindung wird demnach ein erfinderischer selbsteinstellender Toleranzausgleich und ein definiertes Einrücken des Zentrierstiftes in eine Wechselelektrode zur Verfügung gestellt.

Weitere vorteilhafte Ausgestaltungen des Gegenstandes der Erfindung ergeben sich mit und in Kombination aus den nachfolgenden Unteransprüchen.

Gemäß einer ersten bevorzugten Ausführungsform der Erfindung erfolgt die Absenkung der Schweißmutter auf das Blech und damit des Zentrierstiftes in die Wechselelektrode der Stiftzieheinheit vollständig von dem auf die Schweißmutter absenkbaren Schweißkopf der Widerstandsbuckelschweißvorrichtung.

Eine solche technische Lösung ist sehr einfach zu verwirklichen und erfordert keine weiteren technischen Änderungen.

Entsprechend einer zweiten vorteilhaften Ausgestaltung der Erfindung erfolgt die Absenkung des Zentrierstiftes in die Stiftszieheinheit jedoch schrittweise und zwar in einem 1. Schritt zumindest bis zum vollständigen Eintauchen der Einführfase in die Wechselelektrode, sodass die Zentrierstiftspitze nicht mit einem starken Impuls des Schweißkopfes in die Wechselelektrode hineingetrieben wird, wie dies bei der erstgenannten Ausführungsform der Fall ist, sondern zunächst sehr viel behutsamer, sodass eine Beschädigung der Lochkante der Bohrung der Wechselelektrode weitgehend vermieden werden kann. Diese Lochkante wird dabei zwar auch mechanisch belastet und dadurch auf Dauer ebenfalls verschlissen, aber da dies mit relativ geringer Kraft und quasi impulsfrei geschieht, kommt es hierbei zu keinen nennenswerten Beschädigungen, wie dies bei der ersten Ausführungsform der Erfindung möglicherweise der Fall sein kann.

Da solche Wechselelektroden jedoch von vornherein als Verschleißteile ausgelegt sind, ist aber hier eine schleichende wie auch eine stärkere Kantenrundung unkritisch, sodass die Vorteile der vorliegenden Erfindung die bekannten Nachteile des Standes der Technik überwiegen.

Bei einer vorteilhaften Ausführungsform der Erfindung erfolgt der 1. Schritt zumindest bis zum 1. vollständigen Eintauchen der Einrückfase über eine Vorrichtung am Schaft der Stiftzieheinheit, die eine hydraulische, pneumatische, mechanische oder auch eine elektrische Vorrichtung sein kann, wobei vorteilhafterweise am Schaft ein doppelwirkender Kolben angeordnet ist und die Absenkung des Zentrierstiftes im 1. Schritt durch eine pneumatische Druckbeauftragung dieses Kolben in eine Ziehrichtung nach unten erzeugbar ist.

Vorteilhafterweise weist der Kolben in der Stiftzieheinheit dazu eine obere Druckzylinderkammer für das Einfahren des Zentrierstiftes auf sowie eine untere Druckzylinderkammer für ein Ausfahren des Zentrierstiftes in die Grundstellung, wobei an der unteren Druckzylinderkammer ein entsperrbares Rückschlagventil angeordnet ist, welches bei einer Druckbeaufschlagung des oberen Druckzylinders, gegen einen sich aufbauenden Gegendruck in der unteren Druckzylinderkammer kurzzeitig absperrbar ist, bis die Zentrierstiftspitze bis über die Einrückfase in die Wechselelektrode eingerückt ist. Danach kann das Rückschlagventil geöffnet werden und die Schweißmutter hoch genau gegenüber der Durchgangsöffnung positioniert auf dem Blech verschweißt werden, wobei der Zentrierstift zusammen mit der Schweißmutter von dem Schweißkopf nach unten bewegt werden.

Nachfolgend ist ein Ausführungsbeispiel der Erfindung anhand von Zeichnungen näher beschrieben. Es zeigen:

### Bezugszeichenliste:

- 1: Schweißmutter
- 2: Durchgangsausnehmung im Blech
- 3: Blech
- 4: Wechselelektrode
- 5: Zentrierstift
- 6: Mutternaufnahme
- 7: Zentrierstiftspitze
- 8: Schaft
- 9: 1. Stiftabschnitt
- 10: 2. Stiftabschnitt
- 11: Einrückfase
- 12: Kolben
- 13: obere Druckkammer
- 14: untere Druckkammer
- 16: Bohrung
- 17: Druckfeder

- Fig .1: eine stark vergrößerte Schnittdarstellung des Oberteils einer Stiftzieheinheit,
- Fig. 2: eine vergrößerte Schnittdarstellung des Oberteils der Stiftzieheinheit der Fig. 1 mit seitlich in der Schweißmutter versetzter Zentrierstiftspitze in einer Durchgangsausnehmung eines exzentrisch zugeführten Bleches, und
- Fig. 3: eine Schnittdarstellung der Stiftzieheinheit gemäß den Fig. 1 und 2 mit gefangener Schweißmutter und mit teilweise in die Wechselelektrode abgesenkter und darin zentrierter Zentrierstiftspitze.

Die Stiftzieheinheit der Widerstandsbuckelschweißvorrichtung zum zentrischen Verschweißen einer Schweißmutter 1 über einer Durchgangsausnehmung 2 eines Bleches 3 weist einen durch eine Wechselelektrode 4 axial verschieblichen Zentrierstift 5 für die Schweißmutter 1 mit einer kegelstumpfartig nach außen gerichteten Schweißmutternaufnahme 6 auf, wobei der Zentrierstift 5 aus mehreren Teilabschnitten mit einer oberen Zentrierstiftspitze 7 und einem ein- oder mehrteiligen Schaft 8 besteht und die Zentrierstiftspitze 7 unter der Schweißmutternaufnahme 6 einen 1. Stiftabschnitt 9 mit einem Zentrierdurchmesser aufweist, der gleich oder nur geringfügig kleiner ist als das Durchmessermaß der Durchgangsausnehmung 2 im Blech 3 und einer Bohrung 16 in der Wechselelektrode 4.

Unter dem 1. Stiftabschnitt 9 weist die Zentrierstiftspitze 7 einen 2. Stiftabschnitt 10 mit einem gegen den Zentrierdurchmesser reduzierten Taillendurchmesser auf sowie zwischen dem 1. und dem 2. Stiftabschnitt 9; 10 eine umlaufende Einrückfase 11, wobei in einer Ausgangsstellung der Stiftzieheinheit der 1. Stiftabschnitt 9 der Zentrierstiftspitze 7 zusammen mit der Einrückfase 11 frei aus der Bohrung 16 der Wechselelektrode 4 hervorragt.

Der 2. Stiftabschnitt 10 weist dabei ein Längenmaß auf, welches größer ist als die Höhe der von ihm durchgriffenen Wechselelektrode 4 und die Zentrierstiftspitze 7 ist stirnseitig am Schaft 8 des Zentrierstiftes 5 achsparallel und/ oder winkelbeweglich angeordnet, sodass in der Ausgangsstellung des Zentrierstiftes 5 dieser in der Bohrung 16 der Wechselelektrode 4 ein seitliches Ausgleichsspiel beim exzentrischen Zuführen einer Durchgangsausnehmung 2 eines Bleches 3 aufweist.

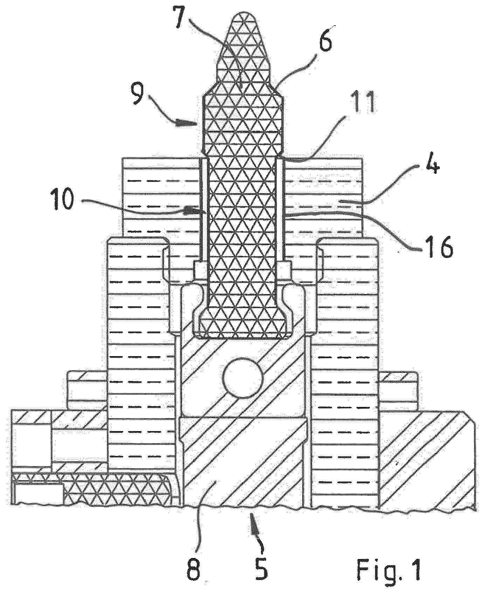

Figur 1 zeigt eine solche Grundstellung des Zentrierstiftes 5 bzw. der Zentrierstiftspitze 7 in einer Mittellage in der Bohrung 16 der Wechselelektrode 4, wobei die Zentrierstiftspitze 7 mit ihrem 1. Stiftabschnitt 9 und der Einrückfase 11 aus der Wechselelektrode 4 hervorragt, sodass der taillierte 2. Stiftabschnitt 10 innerhalb der Wechselelektrode 4 das erfinderische radiale seitliche Spiel in deren Bohrung 16 aufweist.

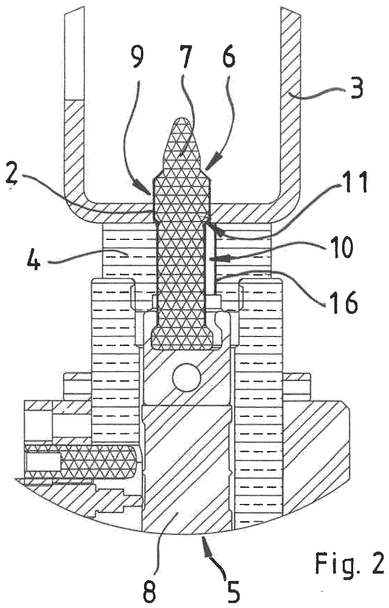

Fig. 2 zeigt dagegen das Oberteil der Stiftzieheinheit mit einer seitlich in der Schweißmutter 1 versetzten Zentrierstiftspitze 7 in einer Durchgangsausnehmung 2 eines Bleches 3, wobei auch in dieser Position eine aufgeworfene Schweißmutter 1 exakt gefangen und über dem Durchgangsausnehmung 2 des Bleches 3 positioniert werden kann.

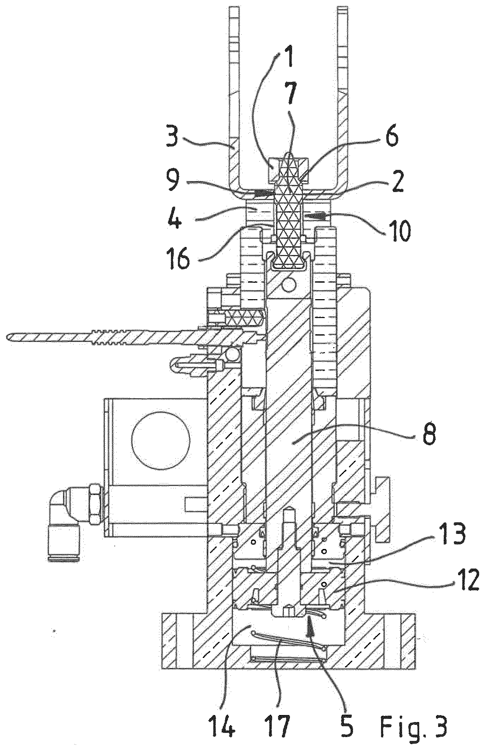

In einer leicht abgesenkten Position der Zentrierstiftspitze 7, wie sie in Figur 3 dargestellt ist, ist die Schweißmutter 1 korrekt mittig über der Durchgangsausnehmung 2 im Blech 3 positioniert, wobei durch ein teilweises Absenken des Zentrierstiftes 5 mit seiner Zentrierstiftspitze 7 diese über die Einrückfase 11 mittig in der Bohrung 16 der Wechselelektrode 4 zentriert wird und auch das Blech 3 über der Stiftzieheinheit der Widerstandsbuckelschweißvorrichtung ausgerichtet werden kann.

Das Absenken der Schweißmutter 1 auf das Blech 3 und das Zentrieren in der Wechselelektrode 4 kann dabei entweder allein durch das Zustellen des zeichnerisch nicht dargestellten Schweißkopfes der Widerstandsbuckelschweißvorrichtung erfolgen oder aber, wie in Figur 3 dargestellt ist, zunächst nur um einige Millimeter über einen Pneumatikzylinder am Zentrierstift 5 mit einem doppelt wirkendem Kolben 12, der eine obere Druckkammer 13 und eine untere Druckkammer 14 erzeugt.

Die Stiftzieheinheit weist dazu ein zeichnerisch nicht dargestelltes entsperrbares Rückschlagventil vor der unteren Druckkammer 14 auf, in der in seinem abgesperrten Zustand über die obere Druckkammer 13 ein Gegendruck aufgebaut wird, der den Kolben 12 und damit den Zentrierstift 5 um wenige Millimeter nach unten bewegt. Hierdurch wird die Zentrierstiftspitze 7 um wenige Millimeter in die Bohrung 16 der Wechselelektrode 4 hineingezogen, sodass dabei die Ausrichtung der Zentrierstiftspitze 7 mit der aufgefangen Schweißmutter 4 und dem Blech 3 mit einer relativ geringen Kraft und quasi impulsfrei erfolgt, wodurch es an der Kante der Wechselelektrode 4 bis auf eine schleichende Kantenrundung zu keinen Beschädigungen kommt, wobei solche aber unkritisch sind, da es sich bei der Wechselelektrode 4 um ein oftmals auszutauschendes Verschleißteil handelt. Nach dem Entsperren des Rückschlagsventils kann die Schweißmutter 1 dann durch den Schweißkopf präzise positioniert auf das Blech 3 aufgedrückt und dort verschweißt werden, wozu der Zentrierstift über eine Druckbeaufschlagung der oberen Druckkammer13 zu seinem mechanischen Schutz zusätzlich weiter aus dem Schweißbereich herausgezogen werden kann.

In der unteren Druckkammer 14 ist zusätzliche eine Druckfeder 17 unter dem Zentrierstift 5 bzw. dem Kolben 12 angeordnet ist, die auch im drucklosen Zustand der Stiftzieheinheit den Ausgangszustand mit einer maximal nach außen gedrückt gehaltenen Zentrierstiftspitze 7 aufrecht erhält.

## Patentansprüche

1. Stiftzieheinheit einer Widerstandsbuckelschweißvorrichtung zum zentrischen Verschweißen einer Schweißmutter (1) über einer Durchgangsausnehmung (2) eines Blechs (3), mit einem durch eine Wechselelektrode (4) axial verschiebbaren Zentrierstift (5) für die Schweißmutter (1) mit einer kegelstumpfartigen nach außen gerichteten Schweißmutternaufnahme (6), **dadurch gekennzeichnet, dass** der Zentrierstift (5) aus mehreren Teilabschnitten mit einer oberen Zentrierstiftspitze (7) und einem ein- oder mehrteiligen Schaft (8) besteht und die Zentrierstiftspitze (7) die Schweißmutternaufnahme (6) und darunter einen 1. Stiftabschnitt (9) aufweist mit einem Zentrierdurchmesser, der geringfügig kleiner ist als das Durchmessermaß der Durchgangsausnehmung (2) des Bleches (3) und einer Bohrung (16) durch die Wechselelektrode (4) und dass die Zentrierstiftspitze (7) unter dem 1. Stiftabschnitt (9) einen 2. Stiftabschnitt (10) mit einem gegen den Zentrierdurchmesser reduzierten Taillendurchmesser aufweist und zwischen dem 1. und dem 2. Stiftabschnitt (9; 10) eine umlaufende Einrückfase (11) erzeugt ist und dass der 1. Stiftabschnitt (9) in einer Ausgangsstellung der Stiftzieheinheit zusammen mit der Einrückfase (11) aus der Wechselelektrode (4) hervorragt und dass der 2. Stiftabschnitt (10) ein Längenmaß aufweist, welches größer ist als die Höhe der von ihm durchgriffenen Wechselelektrode (4) und dass die Zentrierstiftspitze (7) stirnseitig am Schaft (8) des Zentrierstiftes (5) achsparallel und/ oder winklig seitlich beweglich daran angeordnet ist und in einer Ausgangsstellung der Stiftzieheinheit in der Durchgangsausnehmung (2) der Wechselelektrode (4) ein seitliches Ausgleichsspiel beim Zuführen eines Bleches (3) erzeugt ist.

2. Stiftzieheinheit nach Anspruch 1, **dadurch gekennzeichnet, dass** die Zentrierstiftspitze (7) sich nach dem zentrischen oder exzentrischen Auflegen eines Bleches (3) mit ihrer Schweißmutternaufnahme (6) und ihrem 1. Stiftabschnitt (9) durch die Durchgangsausnehmung (2) im Blech (3) hindurch erstreckt und dabei ein möglicherweise vorliegender geringer Versatz zwischen der Durchgangsausnehmung (2) und dem Zentrierstift (5) durch die Beweglichkeit der Zentrierstiftspitze (7) ausgeglichen ist und dass die Zentrierstiftspitze (7) mit der aufgefangenen Schweißmutter (1) anschließend in die Wechselelektrode (4) absenkbar ist und dabei der Zentrierstift (5) von der Einrückfase (11) in der Wechselelektrode (4) und damit die Schweißmutter (1) über der Durchgangsausnehmung (2) des Bleches (3) zentrierbar ist.

3. Stiftzieheinheit nach Anspruch 2, **dadurch gekennzeichnet, dass** die Absenkung der Schweißmutter (1) auf das Blech (3) und des Zentrierstiftes (5) in die Stiftzieheinheit vollständig von einem auf die Schweißmutter (1) absenkbaren Schweißkopf der Widerstandsbuckelschweißvorrichtung erzeugbar ist.

4. Stiftzieheinheit nach Anspruch 2, **dadurch gekennzeichnet, dass** die Absenkung des Zentrierstiftes (5) in die Stiftzieheinheit in einem 1. Schritt zumindest bis zum vollständigen Eintauchen der Einrückfase (11) in die Wechselelektrode (4) über eine Vorrichtung am Schaft (8) der Stiftzieheinheit und erst in einem 2. Schritt vollständig von dem auf die Schweißmutter (1) absenkbaren Schweißkopf der Widerstandbuckelschweißvorrichtung erzeugbar ist.

5. Stiftzieheinheit nach Anspruch 4, **dadurch gekennzeichnet**, das die Vorrichtung eine hydraulische, pneumatische, mechanische oder elektrische Vorrichtung ist.

6. Stiftzieheinheit nach Anspruch 5, **dadurch gekennzeichnet, dass** am Schaft (8) ein doppeltwirkender Kolben (12) angeordnet ist und die Absenkung des Zentrierstiftes (5) im 1. Schritt durch eine Druckbeaufschlagung dieses Kolben (12) erzeugbar ist.

7. Stiftzieheinheit nach Anspruch 6, **dadurch gekennzeichnet, dass** der Kolben (12) in der Stiftzieheinheit eine obere Druckzylinderkammer (13) für ein Einfahren des Zentrierstiftes (5) und eine untere Druckzylinderkammer (14) für ein Ausfahren des Zentrierstiftes (5) aufweist und dass am unteren Druckzylinderkammer (14) ein entsperrbares Rückschlagventil (15) angeordnet ist, welches bei einer Druckbeauftragung der oberen Druckzylinderkammer (13) gegen einen sich aufbauenden Gegendruck in der unteren Druckzylinderkammer (14) kurzzeitig absperrbar ist, bis die Zentrierstiftspitze (7) bis über die Einrückfase (11) in die Wechselelektrode (4) eingerückt ist.
